# EUROPEAN PATENT APPLICATION

(11) **EP 3 413 379 A1**
(43) Date of publication of application: **12.12.2018**
(21) Application number: 17174750.4
(22) Date of filing: 07.06.2017
(51) Int. Cl.: H01M 2/34, H01M 10/647, H01M 10/6556, H01M 10/6557, H01M 10/613, H01M 10/0525

(54) **SAFETY UNIT FOR A BATTERY**

(71) Applicant: Lithium Energy and Power GmbH & Co. KG, 70469 Stuttgart (DE)
(72) Inventor: Ohmer, Nils, Lithium Energy And Power Corpo, 601-8520 (JP)
(74) Representative: Bee, Joachim

(57) **Abstract**

The present invention concerns a safety unit (50) for a battery cell (10), comprising a fast discharge and/or shut down unit (30) configured to controllably establish a fast discharge and/or shut down process of or for the underlying battery cell (10) and a heat exchange unit (40) configured to controllably establish heat exchange process of or for the underlying battery cell (10), and configured to be attachable or attached to a surface of the underlying battery cell (10) and in particular as a plate like structure.

## Description

### State of the Art

The present invention concerns a safety unit for a battery cell, a cell module, a battery, an apparatus and in particular a vehicle.

Recent growth of electronic industry has increased the demand for high performance, compact and portable electronic devices. Such electronic devices require batteries with high energy density and capacity. Particularly suitable for this purpose are nickel-rich and lithium-rich batteries. However, such batteries bear problems in case of battery cell failure or battery cell abuse. As a consequence, the battery may show undesired hazardous behavior, such as degassing, development of fire and explosion.

In order to avoid such a hazardous behavior, battery cells have been equipped on the one hand with fast discharge and/or shut down units, for instance together with certain separator configurations within the electrochemical part. The fast discharge and/or shutdown units may be configured in order to discharge the electrochemical part via a resistor to be connected between the battery cell terminals or by the generation of several or at least one cell-internal short circuit between the electrodes in order to reduce the energy amount stored in the electrochemical part and in particular to simultaneously increase the temperature of the separator within the electrochemical part in order to cause an at least partial impermeability of the separator with respect to a certain kind of ions, thereby achieving an irreversible passivation of the underlying battery cell.

On the other hand and because of the large amount of energy transferred during a fast discharge and/or shutdown process as well as during normal operation there is a need for having sufficient heat sink capacities on the one hand without increasing the burden during the assembly process of the battery on the other hand.

This cannot be realized at the same time with known battery assemblies in a sufficient manner.

DE 10 2012 214 951 A1 shows a device for deactivating a defective or damaged battery.

DE 11 2010 000 764 T5 shows a safety venting mechanism for batteries.

### Disclosure of the invention

The safety unit for a battery cell according to the present invention as defined in independent claim 1, however, has the advantage of enabling a simple, compact and reliable safety concept for a battery cell, in particular within a cell module or a battery. This is achieved by a safety unit for a battery cell which comprises
(i) a fast discharge and/or shut down unit which is configured in order to controllably establish a fast discharge and/or shut down process of or for the underlying battery cell and
(ii) a heat exchange unit configured to controllably establish heat exchange process of or for the underlying battery cell, and
which is configured in order to be attachable or attached to a surface of the underlying battery cell and in particular as an integrally formed plate like structure.

According to the present invention the proposed safety unit offers at once both thermal and charge management safety aspects to an attached underline battery cell, namely by providing (i) discharge and/or shut down and (ii) heat exchange as required in a controlled manner. Thus, safety of the underlying battery cell can be realized in a reliable and less space consuming manner.

The dependent claims contain advantageous embodiments of the present invention.

According to a preferred embodiment of the present invention the safety aspects may be realized by having a configuration for the fast discharge and/or shut down unit which is chosen in order to controllably establish at least one additional current path between underlying electrodes of the battery cell or its cell terminals.

In practical embodiments, an embodiment of the safety unit according to the present invention may comprise as a part of said fast discharge and/or shut down unit one or a plurality of penetration elements.

Under such circumstances the fast discharge and/or shut down unit may further be configured in order to controllably have the penetration elements penetrate an underlying and in particular attached battery cell in order to thereby establish one or a plurality of internal short circuiting current paths between the electrodes of the battery cell.

By these measures it is possible to establish a plurality of internal shortings which may lead to a fast discharge of the underlying battery cell thereby reducing its energy content.

Additionally or alternatively the plurality of internal shorts may be used to increase in a controlled manner the overall temperature of the underlying battery cell in such a manner that - by using a certain kind of a shutdown separator - passivation of the battery cell can thermally be induced by melting the separator due to increased temperature to thereby destroy the separator's permeability to a certain kind of ions and by consequently destroying the electrochemical pathways within the battery cell and consequently shutting down the energy producing processes.

The fast discharge and/or shut down unit may be realized additionally or alternatively with other concepts, too.

According to a further preferred embodiment of the safety unit following the invention's concept, the fast discharge and/or shut down process may comprise a discharge switch between discharge lines connecting first and second connection nodes, wherein the first and second connection nodes may be configured in order to be attachable or to be attached to first and second cell terminals, respectively, and wherein said discharge switch may be configured in order to be controllably closable for short-circuiting said first and second connection nodes and thereby short circuiting said first and second cell terminals of the underlying battery cell.

Following this concept, a more or less external short circuit is established by means of the discharge switch and by connecting the cell terminals, thereby also realizing a discharge process and/or an increase of temperature within the battery cell. The latter may be again used in connection with a certain kind of passive rating separator having a transition temperature above which the separator irreversibly becomes impermeable to certain kind of ions thereby destroying the electrochemical capabilities of the underlying battery cell.

In order to rule the safety concept, underlying the present invention, different kinds of control mechanisms may be installed.

Thus additionally or alternatively, the safety unit may comprise a control unit which is configured in order to detect the presence or absence of a fast discharge and/or shut down demanding state of one or a plurality of battery cells in order to controllably and conditionally activate said fast discharge and/or shut down unit upon detection of the presence of a fast discharge and/or shut down demanding state.

The underlying fast discharge and/or shut down demanding state is referred to be a state described by internal or external conditions of the underlying battery cell and its operation which requires a fast discharge and/or a shutdown of the battery cell in order to avoid a hazardous behavior thereof.

Therefore, further improvements can be achieved in view of improving the safety behavior of an underlying battery cell when the control unit is configured in order to detect the presence of a fast discharge and/or shut down demanding state if at least one of the following circumstances is fulfilled:
- an internal short circuit exists in the underline battery cell,
- an underlying apparatus supplied with energy by the underlying battery cell has an accident, in particular in which the underlying battery cell will be in the impact zone of a crash,
- the underlying battery cell is overcharged,
- the underlying battery cell is externally short circuited,
- a failure occurs in an underlying apparatus supplied with energy by the underlying battery cell and is able to lead to an unsafe situation of the underlying battery cell.

Such conditions may be combined in an arbitrary manner.

The safety concept of the safety unit according to the present invention in view of the thermal aspects may be realized by various kinds of applications of heat transport processes.

In a preferred embodiment of the present invention the provided heat exchange unit may comprise or form a heat exchange surface which is configured in order to be attachable or to be attached to a contact surface of an underlying battery cell for establishing heat exchange between the battery cell and the heat exchange surface of the heat exchange unit. This kind of thermal safety concept is to some extent realized by heat conduction between the contact surface of the underlying battery cell and the heat exchange surface of the heat exchange unit.

In addition, it is possible to further increase the safety aspects in view of the thermal budget of the battery cell when - according to a further preferred embodiment of the present invention - the underlying heat exchange unit comprises one or a plurality of heat exchange medium transport means, in particular heat exchange medium conduits, configured to convey a heat exchange medium and/or establish a thermal contact between the heat exchange medium and the heat exchange surface. This measure to some extent focuses on forced thermal convection by using a heat transport medium, for instance a liquid, a fluid or gas conveyed by the underlying heat exchange medium transport means.

The present invention further concerns a cell module comprising a plurality of battery cells, wherein between at least two directly neighboring battery cells a safety unit according to the present invention is positioned therebetween, in particular sandwiched, mechanically and/or thermally contacting said directly neighboring battery cells and/or formed as an intermediate plate structure.

In a preferred embodiment of the cell module according to the present invention between a plurality of and in particular between each of directly neighboring battery cells a safety unit according to the present invention is provided.

The individual battery cells of the underlying cell arrangement may be defined in different ways without departing from the gist of the present invention.

It is of particular advantage if a respective battery cell comprises first and second battery cell terminals for an external contact of the battery cell, e.g. within the cell arrangement or cell module, e.g. in connection with other neighboring battery cells of the plurality of battery cells, an electrochemical part, preferably formed as or comprising a jelly roll or an electrode stack configuration, connected to the battery cell terminals and/or a direct or indirect electric connection to a fast discharge and/or shut down unit of an underlying safety portion connected to the battery cell terminals in parallel to the electrochemical part and configured in order to discharge and/or to shut down the battery cell under first predetermined conditions by connecting the battery cell terminals via a resistor.

Additionally or alternatively, in a respective battery cell the electrochemical part may comprise a positive electrode, a negative electrode, an electrolyte component having a conductive salt component and a solvent component, and a separator.

The separator may be configured in order to become at least partially impermeable for ions generated inside of the electrochemical part upon reaching a predefined temperature. Such a process realizes a controllable and conditional passivation of a battery cell or a plurality thereof.

Within a few milliseconds after activation of a fast discharge and/or shut down the charge carriers in front of the electrodes are discharged very fast. This leads to a depletion of charge carriers in front of the electrodes and causes a first strong depolarization of the electrodes. Within the next few hundred milliseconds, in a second step, the charge carriers already existing in the electrolyte will be very fast discharged in comparison to the slower deinsertion/insertion reaction of the electrodes, to the slow diffusion through the solid-electrolyte interface (SEI) and to the slow diffusion in the active material. This causes a strong gradient in the charge carrier concentration within the electrolyte and also a high voltage drop of the battery cell and a first plateau phase is reached.

The faster the discharge, the higher is the safety behavior of the battery cell, because the discharge current rapidly decreases and the warming of the battery cell is not locally fixed at a damage zone. Therefore, the total warming of the battery cell is low compared to the local warming in case of a short circuit.

According to a further aspect of the present invention a battery is provided which comprises one or a plurality of cell modules according to the present invention.

According to a preferred embodiment of the inventive battery, the plurality of battery cells is configured as a plurality of pairs of battery cells, wherein at least one of the members of the pairs of battery cells is formed according to the present invention. It is of particular advantage that in the pairs it is sufficient that one of the members of the pairs is provided with the inventive concept of having a separation means. This reduces the burden of establishing the respective equipment.

However, a more preferred embodiment of the present invention provides for each battery cell of the plurality of battery cells a configuration according to the present invention, namely by establishing for each battery cell in the battery an individual fast discharge unit together with a respective control unit in particular with respective control parts and/or actuating and/or signaling parts.

Eventually the present invention also provides an apparatus and in particular a vehicle, comprising an operation part and an energizing part for energizing the operation part. According to the present invention the energizing part is or comprises one or a plurality of cell modules and/or one or a plurality of batteries, both according to the present invention.

### Brief description of the drawings

In the following section embodiments of the present invention are disclosed with reference to the enclosed figures.
- Figures 1 and 2: schematically show a first embodiment of the safety unit according to the present invention in a non-activated and in an activated state, respectively.
- Figures 3 and 4: schematically show another embodiment of the safety unit according to the present invention in a non-activated and in an activated state, respectively.
- Figure 5: schematically describes the application of the embodiment of the safety unit 50 according to figures 1 and 2 to a single battery cell.
- Figure 6: describes a cell module or a battery according to the present invention having involved a plurality of battery cells each having attached thereto an embodiment of the safety unit according to the present invention as shown in figures 1 and 2.

### Embodiments of the present invention

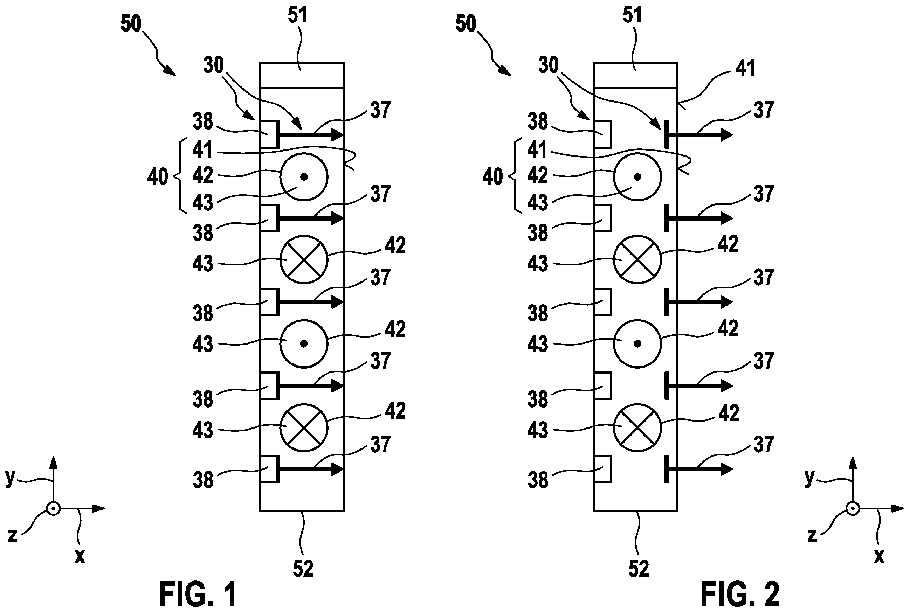

In the following, embodiments and the technical background of the present invention are described in detail by taking reference to accompanying figures 1 to 6. Identical or equivalent elements and elements which act identically or equivalently are denoted with the same reference signs. Not in each case of their occurrence a detailed description of the elements and components is repeated.

The depicted and described features and further properties of the invention's embodiments can arbitrarily be isolated and recombined without leaving the gist of the present invention.

Figures 1 and 2 schematically show a first embodiment of the safety unit 50 according to the present invention in a non-activated and in an activated state, respectively.

In figure 1, the safety unit 50 according to the present invention comprises within a package or housing 52 a fast discharge and/or shut down unit 30 and a thermal or heat exchange unit 40. In addition a control unit 51 is provided which is configured in order to control the operation of the safety unit 50 and in particular of the fast discharge and/or shut down unit 30 and/or of the thermal or heat exchange unit 40.

In the embodiment shown in figures 1 and 2, the fast discharge and/or shut down unit 30 comprises a plurality of penetration elements 37 which may be referred to as pins. Each of the penetration elements 37 has assigned a penetration driver 38 which is configured to drive upon activation by the control unit 50 the respective penetration element 37 in the x direction of the figure from the lefthand side to the right-hand side such that its tip represented by the arrow leaves the inside of the housing 52 as shown in figure 2.

In case of an attachment to an underlying battery cell 10 as described below, the tip portion of the penetration elements 37 may penetrate a housing of the battery cell 10 and in particular its electrochemical part in order to generate in each case a short circuit current path between the battery cell's electrodes. Such a shorting yields a discharge and/or a heating up of the battery cell 10. The discharge reduces the energy content of the battery cell, whereas heating up the battery cell in its entirety may - in cooperation with a passivation separator - lead to an overall passivation of the underlying electrochemical processes generating the energy of the battery cell.

In figures 1 and 2, the safety unit 50 is formed as a plate like element in the yz plane with the penetration elements 37 being extendable and/or movable in the x direction.

In order to rule the thermal budget of an underlying battery cell 10, one of the surfaces of the housing 52 serves as a contact surface and during operation of the thermal or heat exchange unit 40 as a thermal or heat exchange surface 41. In the figures the right-hand side of the housing 52 serves as set heat exchange surveys 41. In preferred embodiments, in addition the surface opposing the heat exchange surface 41 may serve as a heat exchange surface, too.

In figures 1 and 2 the thermal or heat exchange unit 40 comprises besides its contact surface 41 one or a plurality of thermal or heat exchange means or conduits 42 configured to carry or convey an underlying thermal or heat exchange medium 43 such as a liquid, a fluid or a gas. In contrast to that, a single thermal heat exchange conduit 42 may be provided having a configuration like a serpent within the housing 52.

The plural instances of the conduits 42 defer by the cross and dot markings with the cross representing a thermal medium flow in a direction into the xy plane and a dot indicating a medium flow out of the xy plane in figures 1 and 2.

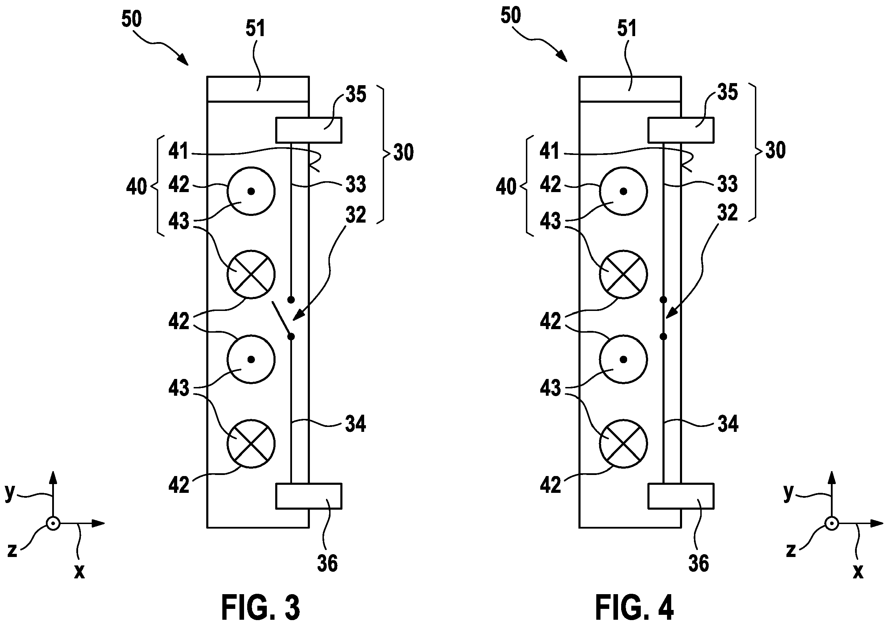

Figures 3 and 4 schematically show another embodiment of the safety unit 50 according to the present invention in a non-activated and in an activated state, respectively.

A major difference to the embodiment shown in figures 1 and 2 is based on the different configuration of the fast discharge and/or shut down unit 30.

In the embodiment shown in figures 3 and 4, the fast discharge and/or shut down unit 30 comprises a first and a second connection node 35 and 36, respectively, which are configured upon attachment to an underlying battery cell 10, to mechanically and electrically contact first and second battery cell terminals 11 and 12, respectively. The connection nodes 35 and 36 are connected to each other by first and second discharge lines 33 and 34 having included a discharge switch 32 which is in a non-activated state an open switch as shown in figure 3 and which can be closed upon activation by the control unit 51 as shown in figure 4.

In the activated state with a closed switch 32 first and second connection nodes 35 and 36 are directly electrically connected thereby also connecting and thus short-circuiting first and second cell terminals 11 and 12 of an underlying attached battery cell 10. Such an external short-circuiting yields a discharge process of the battery cell and/or in connection with a thermal passivation of the separator to a passivation of the battery cell and its underlying electrochemical and energy generating processes.

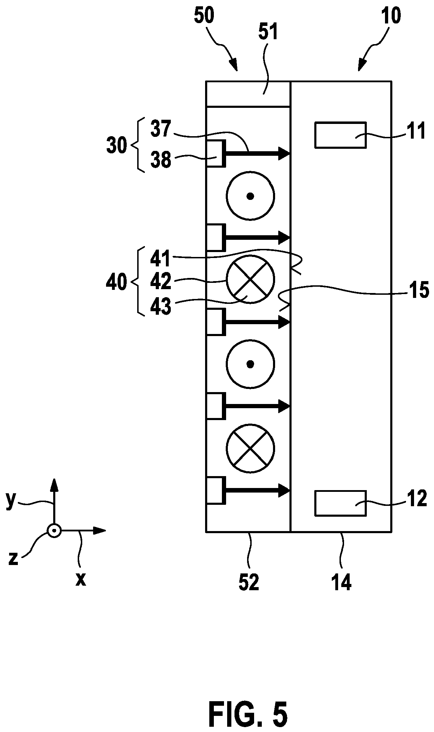

Figure 5 schematically describes the application of the embodiment of the safety unit 50 according to figures 1 and 2 to a single battery cell 10, the battery cell 10 having first and second cell terminals 11 and 12.

As can be seen from figure 5 the contact surface 41 as thermal or heat exchange surface is attached to a site surface 15 of the housing 14 of the underlying battery cell 10 to thereby enable a controlled heat exchange between the battery cell and the underlying heat exchange system.

The heat exchange process may not only be used for cooling down the battery cell's electrochemical part but also may be used for thermal management in general. This may be referred to as keeping the operation temperature in a certain range which may also be done before or in the beginning of the operation, for instance to achieve an appropriate start-up temperature.

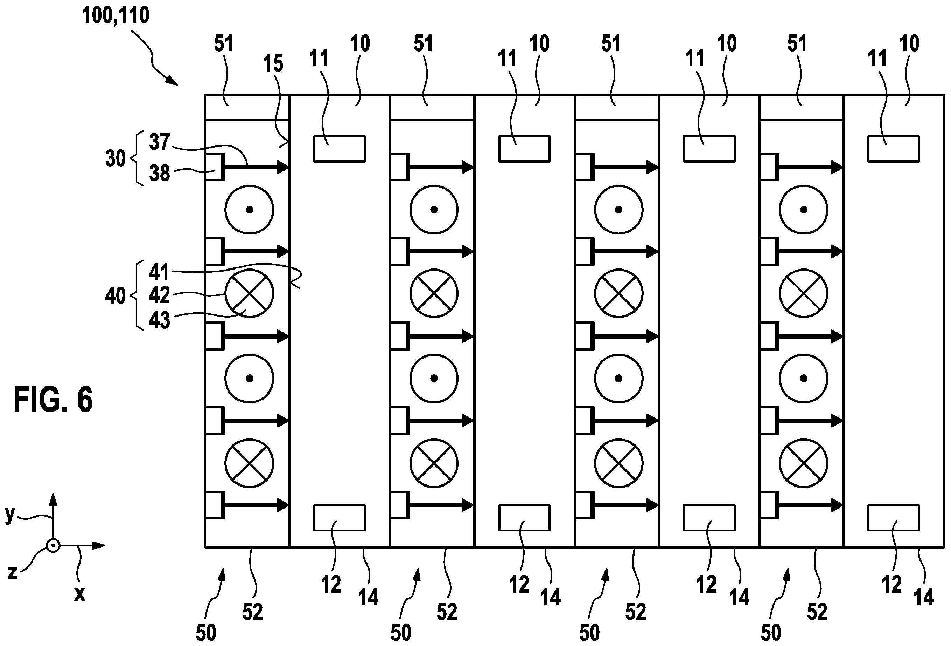

Figure 6 describes a cell module 110 or a battery 100 according to the present invention having involved a plurality of battery cells 10 each having attached thereto an embodiment of the safety unit 50 according to the present invention as shown in figures 1 and 2.

These and further features, properties and advantages of the present invention will be further discussed in the following:

Lithium ion cells 10 are increasingly being used for the construction of batteries 100 for electric traction or other applications' apparatuses.

### Problem setting

1. An efficient cooling system is one of the most important measures to safely operate a battery 100 or cell module 110 or module pack.
2. A functioning cooling system is not sufficient for the use of high-energy cathode materials in order to ensure the thermal safety of the cell 10 - especially in the case of an internal short circuit and during nail penetration, e.g. by fast discharge device (FDD) or fast shutdown device (FSD), it is easily integrated into the thermal runaway.
3. Both a cooling system and a FDD / FSD enclosure require space on the module level and on the pack level, which reduces the volumetric energy density.
4. The present invention proposes the combination of the cooling system and the FSD and/or FDD, which can reduce the overall volume requirement with the same functionality.

### Application example

1. One possibility of effectively cooling individual battery cells 10 on the module level is the use of cooling plates as safety units 50 between the individual cells 10, that is to say, for example, of metal plates which are connected directly to the plates traversed by coolant at the bottom of a module 110.
2. Particularly when cells 10 with a higher energy content are used, cooling of the cells 10 is advisable not only from below, but also from the side faces in order to keep them in a safe temperature window.
3. For example, FIG. 6 shows a cell module 110 in which separating plates as safety units 50 according to the present invention are inserted between the cells 10 in the manner of the invention.
4. With reference to the fast shutdown device or FSD concept, instead of conventional separation plates, according to the invention disk or plate arrangements are used in which each one of the fast discharging and/or shut down concepts and the cooling concept are combined.
   In this case, embodiments with telescopic nails as penetration elements 37 can also be used and placed between two cells 10, respectively. Alternatively, only every second plate can be configured according to the invention, which nails can be discharged in both directions, thus penetrating the electrode stacks simultaneously on both sides and bringing the separator into the shutdown.
5. The use of such a multi-purpose panel with cooling function and FSD function requires only a small additional space requirement and cost requirement in the monomodul block, in particular also compared to the implementation of FDDs.
6. An additional application of the combiplates also in other moduli design between the cells, which hitherto do not have extra cooling plates between the cells, is not only volume-efficient, but also cost-efficient. This is true because of the thus high capacity of the individual cells with, for example, more than 75 Ah when hedged by an FSD application (compared to an FDD application) and supported by an additional cooling function for safe operation.
7. In addition, a cooling plate between the cells prevents or reduces thermal propagation.

### Design concept

1. Combiplates according to the invention can also be formed only in every second cell interspace, for example with nails in the plate, which pile on both sides.
2. A possible higher volume requirement can be compared to other cooling walls by thinner cell walls, since plates themselves also give stability, the absence of the regular FDD and possible larger cells are compensated.
3. There is an advantage over the triggering in the cell because there are no dangers, for example by build-up pressure through primer in the cell interior. There are also lower production costs.
4. A compressor can be used instead of a primer on the module plane.
5. A primer for several FSD combiplates can be used.
6. Combiplates filled with liquid instead of air provide a better cooling function and a more even pressure build-up because a fluid is incompressible so that even nails with higher simultaneity and more evenly can be pushed into the cells.
7. Experiments show that nails are still completely intact when passing through steel housings with a thickness of 1 mm.
8. Additional holes in cell housings due to the ignition of an FSD act as additional degassing vents, with gas leaking directly on a cooling plate so that a lower temperature is reached and an ignition of the leaking electrolyte is less likely with an additional safety factor.
9. Instead of piercing or penetrating with nails, bullets can be shot through, for example, only one to three cells have a plate from which bullets are shot in one direction, which then cut through one to three cells, until they reach the strong back wall of the next combiplate so that they cannot fly further from there.

## Claims

1. Safety unit (50) for a battery cell (10),
comprising
- a fast discharge and/or shut down unit (30) configured to controllably establish a fast discharge and/or shut down process of the underlying battery cell (10) and
- a heat exchange unit (40) configured to controllably establish heat exchange process of the underlying battery cell (10), and
configured to be attachable or attached to a surface of the underlying battery cell (10) and in particular as an integrally formed plate like structure.

2. Safety unit (50) according to claim 1,
wherein said fast discharge and/or shut down unit (30) is configured to controllably establish at least one additional current path between underlying electrodes of the battery cell (10) or its cell terminals (11, 12).

3. Safety unit (50) according to any one of the preceding claims,
wherein said fast discharge and/or shut down unit (30) comprises one or a plurality of penetration elements (37) and is configured to controllably have the penetration elements (37) penetrate an underlying battery cell (10) in order to thereby establish one or a plurality of internal short circuiting current paths between the electrodes of the battery cell (10).

4. Safety unit (50) according to any one of the preceding claims,
- wherein said fast discharge and/or shut down unit (30) comprises a discharge switch (32) between discharge lines (33, 34) connecting first and second connection nodes (35, 36),
- wherein the first and second connection nodes (35, 36) are configured to be attachable or to be attached to first and second cell terminals (11, 12), respectively, and
- wherein said discharge switch (32) is configured to be controllably closable for short-circuiting said first and second connection nodes (35, 36) and thereby for short circuiting said first and second cell terminals (11, 12) of the underlying battery cell (10).

5. Safety unit (50) according to any one of the preceding claims,
comprising a control unit (51) configured to detect the presence or absence of a fast discharge and/or shut down demanding state of one or a plurality of battery cells (10) in order to controllably and conditionally activate said fast discharge and/or shut down unit (30) upon detection of the presence of a fast discharge and/or shut down demanding state.

6. Safety unit (50) according to any one of the preceding claims,
wherein the control unit (51) is configured to detect the presence of a fast discharge and/or shut down demanding state if at least one of the following circumstances is fulfilled:
- an internal short circuit exists in the underline battery cell (10),
- an underlying apparatus supplied with energy by the underlying battery cell (10) has an accident, in particular at which the underline battery cell (10) will be in the impact zone of a crash,
- the underlying battery cell (10) is overcharged,
- the underlying battery cell (10) is externally short circuited,
- a failure occurs in an underlying apparatus supplied with energy by the underlying battery cell and is able to lead to an unsafe situation of the underlying battery cell (10).

7. Safety unit (50) according to any one of the preceding claims,
wherein said heat exchange unit (40) comprises or forms a heat exchange surface (41) configured to be attachable or to be attached to a contact surface (50) of an underlying battery cell (10) for establishing heat exchange between the battery cell (10) and the heat exchange surface (41) of the heat exchange unit (40).

8. Safety unit (50) according to claim 7,
wherein said heat exchange unit (40) comprises one or a plurality of heat exchange medium transport means (42), in particular heat exchange medium conduits, configured to convey a heat exchange medium (43) and/or establish a thermal contact between the heat exchange medium (43) and the heat exchange surface (41).

9. Cell module (110) comprising a plurality of battery cells (10),
wherein between at least two directly neighboring battery cells (10) a safety unit (50) according to any one of claims 1 to 8 is positioned therebetween, in particular sandwiched, mechanically and/or thermally contacting said directly neighboring battery cells (10) and/or formed as an intermediate plate structure.

10. Cell module (110) according to claim 9,
wherein between a plurality and in particular between each of directly neighboring battery cells (10) a safety unit (50) is provided.

11. Battery (100) comprising one or a plurality of cell modules (110) according to any one of claims 9 or 10.

12. Apparatus and in particular vehicle, comprising:
- an operation part and
- an energizing part for energizing the operation part,
wherein the energizing part is or comprises one or a plurality cell modules (110) according to any one of claims 9 and 10 and/or one or a plurality of batteries (100) according to claim 11.
